# EUROPÄISCHE PATENTSCHRIFT

(11) **EP 1 839 031 B1**
(45) Veröffentlichungstag und Bekanntmachung des Hinweises auf die Patenterteilung: **28.09.2011**
(21) Anmeldenummer: 05850349.1
(22) Anmeldetag: 23.12.2005
(51) Int. Cl.: G01N 21/01, B22D 2/00

(54) **METALLURGISCHES SCHMELZGEFÄSS**
METALLURGICAL MELTING POT
CREUSET DE FUSION METALLURGIQUE

(30) Priorität: 30.12.2004 DE 102004063365
(43) Veröffentlichungstag der Anmeldung: 03.10.2007
(73) Patentinhaber: SMS Siemag AG, 40237 Düsseldorf (DE)
(72) Erfinder: UEBBER, Norbert, 40764 Langenfeld (DE); FALKENRECK, Udo, 44797 Bochum (DE); KEMPKEN, Jens, 41564 Kaarst (DE)
(74) Vertreter: Klüppel, Walter
(86) Internationale Anmeldenummer: PCT/EP2005/013993
(87) Internationale Veröffentlichungsnummer: WO 2006/072418

(56) Entgegenhaltungen:
- EP-A- 0 843 166
- WO-A-02/27301
- DE-A1- 4 443 407
- DE-C- 895 161
- KOCH K H: "DIE ENTWICKLUNGEN DER EMISSIONSSPEKTRALANALYSE ALS VORAUSSETZUNG FUER FORTSCHRITTE IN DER METALLURGIE" STAHL UND EISEN, VERLAG STAHLEISEN, DUSSELDORF, DE, Bd. 117, Nr. 7, 18. Juli 1997 (1997-07-18), Seiten 83-87,130, XP000698422 ISSN: 0340-4803

## Beschreibung

Die Erfindung betrifft ein metallurgisches Schmelzgefäß mit einem Schmelzbad, dessen Oberfläche mit Hilfe eines Messgerätes analysierbar ist.

Vorrichtungen dieser Art sind in unterschiedlichen Ausbildungsformen bekannt geworden. Gemeinsam ist diesen Vorrichtungen, dass in der Wandung des die Schmelze aufnehmenden Gefäßes diese durchdringenden Öffnungen vorgesehen sind, die mit einem Gas zur Freihaltung und Kühlung des Schmelzgutes beaufschlagt werden und es erlauben, die Schmelze mit Hilfe von Laser oder anderen Geräten zu analysieren und deren Temperaturen zu messen.

Aus der deutschen Patentschrift DE 895 161 C ist eine Einrichtung zum Messen der Temperatur des Stahlbades in einem blasenden Konverter mit Hilfe eines hinter einer Winddüse in deren Achsrichtung angeordneten Strahlungsmessgerätes bekannt. Die Winddüse besteht dabei aus einem in der Konverterwand von Innen nach Außen ansteigenden winddurchströmten Kanal, der oberhalb oder nur wenig unterhalb des Badspiegels endet.

Da die Anordnung der Geräte im Nahbereich des Düsenaustritts wegen der Hitze und der Staubentwicklung deren Handhabung und Betrieb außerordentlich erschweren, wurden Übertragungseinrichtungen in Form von Rohrsystemen mit Spiegeln oder Lichtleitern entwickelt. Nach der PCT / WO 03 / 081287 wird über der Schmelzebene des Schmelzgefäßes ein optisches Erfassungsgerät angeordnet, das über Lichtleitkabel mit den Linsen eines Laserdetektors verbunden ist, der von dem Schmelzgut beliebig entfernt angeordnet werden kann. Aus den WO 2004 001 394 und WO 02/27301 sind Vorschläge bekannt, die dahin gehen, in der Seitenwand des Schmelzgefäßes Bohrungen vorzusehen, in denen die Schmelze, gasbeaufschlagt zurückgehalten und dieser Probenabschnitt der Schmelze von, über gelenkige, außerhalb des Schmelzgefäßes angeordnete Spiegelanordnungen von Laserstrahlen erfasst wird, die mit einer ebenfalls außerhalb angeordneten Auswerteinrichtung verbunden sind.

Diese Einrichtungen erfordern sämtlich einen großen apparativen und bedienungstechnischen Aufwand. Der Erfindung liegt die Aufgabe zugrunde, solchen

Aufwand zu vermeiden und eine aus wenigen Bauteilen bestehende, einfach zu montierende und zu bedienende Einrichtung zu schaffen. Sie geht dabei von einem Vorschlag der DE 44 43 407 aus, in einem mit einem Ende in die Schmelze eingetauchten Rohr eine Einrichtung zur Erzeugung eines Plasmas aus der Schmelze und eine Anordnung zur optischen Erfassung der Strahlungsemission des Plasmas sowie eine spektrotive Auswerteinrichtung für die Strahlungsemission anzuordnen und schlägt vor, ein solches Rohr am Schmelzegefäß in der Form eines feuerfest ausgekleideten Kanals, geneigt zur Oberfläche der Schmelze, anzuordnen, wobei das untere Ende des Kanals in der Seitenwand des Schmelzgefäßes mündet, und dessen oberes Ende oberhalb der Ebene des Schmelzbades liegt und in dem Bereich oberhalb der Ebene des Schmelzbades und dem oberen Ende des Kanals ein Gaseinlass mit zugeordnetem Ein- und Auslassventil und darüber ein den Kanalquerschnitt öffnender und schließender Drehschieber angeordnet sind.

Diese Einrichtung wird erfindungsgemäß so betrieben, dass bei geschlossenem Schieber und geöffnetem Einlassventil des Kanals, dieser mit einem Druckgas beaufschlagt und die durch das untere Ende in den Kanal eingedrungene Schmelze und deren Schlackenbestandteile aus dem Kanal verdrängt werden. Anschließend wird der Gasdruck weggenommen und die schlackenfreie Schmelze kann in den Kanal zurückströmen. Dabei besteht bei geöffnetem Drehschieber die Möglichkeit, durch die Schieberöffnung hindurch Messsonden, Laser oder Temperaturfühler durch den Kanal zu betreiben. Dieses Verfahren kann auch durch entsprechendes Schließen und Öffnen des Ventils und des Schiebers wiederholt werden. Bei Verwendung eines Konverters als Schmelzgefäß ist es zweckmäßig, den Kanal mit seiner oberen Öffnung zur Abstichseite hin geneigt anzuordnen, so dass in der Abstichstellung des Konverters die Schmelzebene unterhalb der Kanalöffnung liegt und bei der folgenden Abschlackstellung die untere Öffnung des Kanals am Konverter oberhalb der Schlackenlinie liegt und auf einfache Weise gewährleistet, dass die Schmelze oder Schlackenreste durch die Kippbewegung nicht aus dem Kanal austreten können. Mit dieser erfindungsgemäßen Vorrichtung und deren Anwendung wird ein zuverlässiger Zugang zur Schmelzebene bei geringem Gasbedarf zur Freihaltung der Öffnung geschaffen und es entstehen keine Gasturbulenzen und Schmelzengemische am Messpunkt. Der Zugangskanal zur Schmelze lässt sich bei Bedarf unaufwändig mit einem Manipulator säubern. Es sind keine Spiegel für Laser und Spektrometer und keine optischen Gläser im Strahlengang selbst erforderlich. Die Schmelzebenenhöhe lässt sich mit berührungsfreien Abstandsmessgeräten ermitteln. Große Querschnitte des Zugangskanals erlauben es, über den Laser hinaus Mikrowellen zur energetischen Anregung der Schmelzenatome einzusetzen.

Die Erfindung wird anhand der Zeichnungen näher erläutert.

In der Zeichnung zeigen:
- Figur 1: den Konverter, in Kipp-Achsrichtung gesehen, in schematischer Darstellung,
- Figur 2: die Seitenansicht von Figur 1,
- Figur 3: den Konverter nach Figur 1 in Abstichposition,
- Figur 4: den Konverter nach Figur 1 in Abschlackposition und
- Fig. 5 und Fig. 6: den Kanal von der Seite gesehen in schematischer Schnittdarstellung.

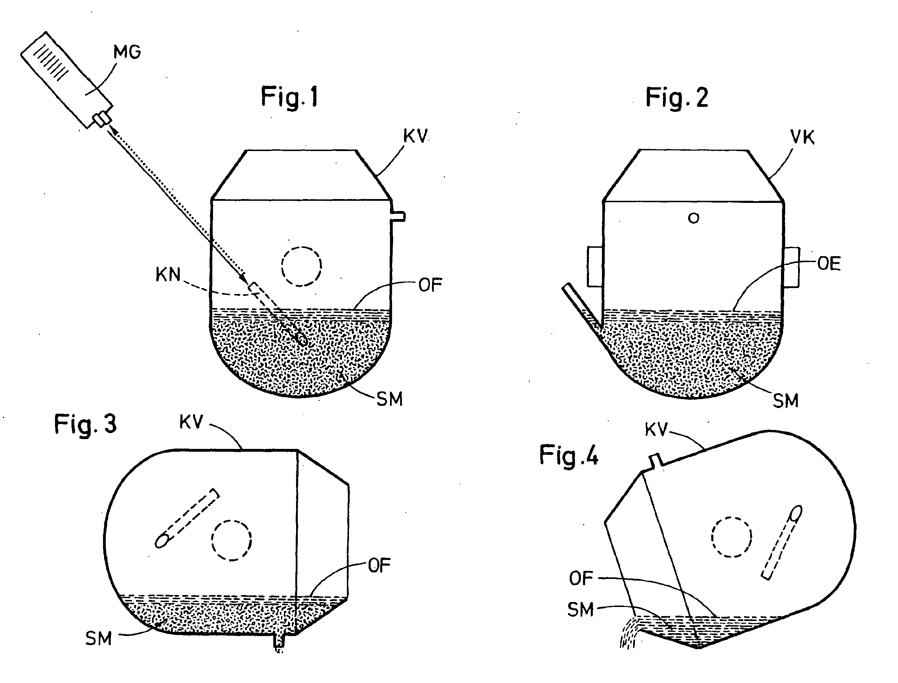

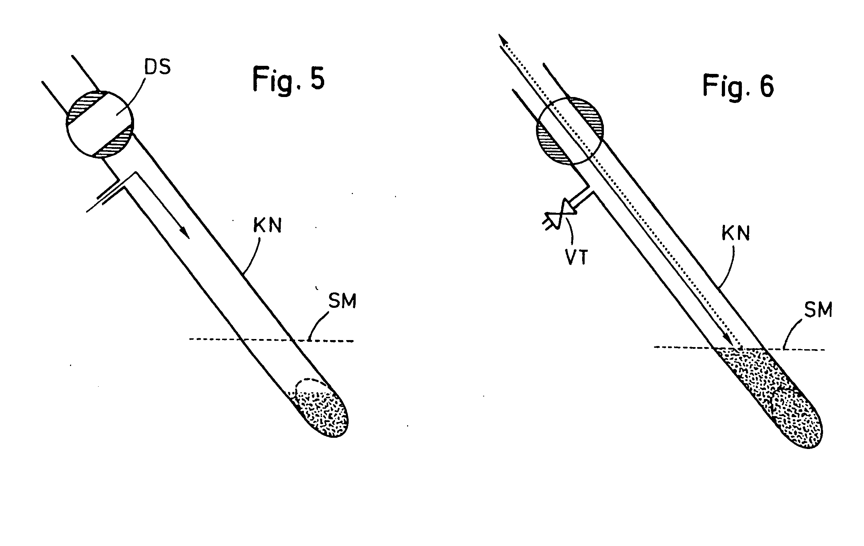

Wie aus Figur 1 bis Figur 4 zu ersehen, ist der Kanal KN in Form eines Rohres an einer Seitenwand des Konverters KV, geneigt zur Oberfläche OF des Schmelzbades SM angeordnet, das in eine Seitenwand des Konverters KV mündet. Aus Figur 5 und 6 ist zu ersehen, dass der Kanal KN oberhalb seiner Mündung ein nach außen führendes Ventil VT und darüber einen Drehschieber DS aufweist, mit dem der Querschnitt vollständig geöffnet und verschlossen werden kann.

Der Kanal KN nach den Figuren 5 und 6 befindet sich in den, in Figur 1 und 2 wiedergegebenen Positionen des Konverters KV. Nach Schließen des Drehschiebers DS und Einführen von Druckgas über das Ventil VT in den Kanal KN aus diesem in den Konverter KV zurückgedrängt, wie in Figur 5 dargestellt. Anschließend, nach Verringerung des Gasdrucks über das Ventil VT, strömt schlackenfreie Schmelze in den Kanal KN zurück. Die Oberfläche der Schmelze SM kann dann von Messgeräten MS und Sonden (Figur 1) analysiert werden, beispielsweise durch Plasmaanregung mit Hilfe eines Lasers und anschließender Spektroskopie der emittierten Plasmastrahlung. Wie aus den Figuren 1 bis 4 ersichtlich, ist der Kanal KN mit einer Neigung des Konverters KN zur Abstichseite hin angeordnet, mit der Folge, dass die untere Öffnung des Kanals KN sowohl bei der Abstichstellung als auch der Abschlackstellung des Konverters KV immer oberhalb der Schmelzenoberfläche liegt.

### Bezugszeichenverzeichnis

- KV: Konverter (Schmelzgefäß)
- OF: Oberfläche der Schmelze
- KN: Kanal-Rohr
- SM: Schmelze
- VT: Ventil
- DS: Drehschieber
- MG: Messgerät

## Patentansprüche

1. Metallurgisches Schmelzgefäß (KV) mit einem Schmelzbad, dessen Oberfläche mit Hilfe eines Messgerätes analysierbar ist; wobei
ein, an der Seitenwand des Schmelzgefäßes (KV) angeordnetes, mit seinem unteren Ende in dessen Wand mündendes und mit seinem oberen offenen Ende oberhalb der Ebene des Schmelzbades endendes Kanalrohr (KN) vorgesehen ist, das oberhalb der Mündung einen Lufteinlass mit zugeordnetem Ein- und Auslassventil (VT) und über diesem einen, den Querschnitt des Kanalrohres (KR) öffnenden und verschließenden Drehschieber (DS) aufweist; und
das Messgerät durch das Kanalrohr betreibbar ist.

2. Schmelzgefäß nach Anspruch 1, das um eine horizontale Achse schwenkbar ist,
**dadurch gekennzeichnet,**
**dass** das Kanalrohr (KN) sowohl in einer Abstichposition wie auch in einer Abschlackposition geneigt zur Oberfläche der Schmelze angeordnet ist.

3. Schmelzgefäß nach Anspruch 2,
**dadurch gekennzeichnet,**
**dass** die Mündung des Kanalrohrs (KN) in der Seitenwand des Schmelzgefäßes (KV) so geneigt angeordnet ist, dass sie bei der Abstich- und Abschlackposition des Schmelzgefäßes (KV) oberhalb der Oberfläche der Schmelze liegt.

## Claims

1. Metallurgical melt vessel (KV) with a melt bath, the surface of which is analysable with the help of a measuring instrument, wherein a channel pipe (KN) which is arranged at the side wall of the melt vessel (KV) and which opens by its lower end in the wall thereof and ends by its upper, open end above the plane of the melt bath is provided, the pipe having above the mouth an air inlet with associated inlet and outlet valve (VT) and above this a rotary slide valve (DS) opening and closing the cross-section of the channel pipe (KN), and the measuring instrument is operable by the channel pipe.

2. Melt vessel according to claim 1, which is pivotable about a horizontal axis, **characterised in that** the channel pipe (KN) is arranged at an inclination to the surface of the melt not only in a tapping position, but also in a slag removal position.

3. Melt vessel according to claim 2, **characterised in that** the mouth of the channel pipe (KN) is arranged in the side wall of the melt vessel (KV) at such an inclination that in the tapping and slag removal position of the melt vessel (KV) it lies above the surface of the melt.

## Revendications

1. Creuset de fusion métallurgique (KV) comprenant un bain en fusion dont la surface est susceptible d'être analysée à l'aide d'un appareil de mesure, dans lequel
il est prévu un tube-canal (KN), agencé au niveau de la paroi latérale du creuset de fusion (KV), qui débouche avec son extrémité inférieure dans sa paroi et qui se termine avec son extrémité supérieure ouverte au-dessus du plan du bain en fusion, le tube comprenant au-dessus de l'embouchure une entrée d'air avec une vanne d'entrée/sortie (VT) associée, et au-dessus de celle-ci un tiroir rotatif (DS) qui ouvre et qui ferme la section du tube-canal (KR) ; et
l'appareil de mesure est amené à fonctionner à travers le tube-canal.

2. Creuset de fusion selon la revendication 1, qui est capable de basculer autour d'un axe horizontal,
**caractérisé en ce que** le tube-canal (KN) et agencé de façon inclinée par rapport à la surface du bain en fusion aussi bien dans une position de soutirage que dans une position de décrassage.

3. Creuset de fusion selon la revendication 2,
**caractérisé en ce que** l'embouchure du tube-canal (KN) est agencée dans la paroi latérale du creuset de fusion (KV) avec une inclinaison telle qu'elle se trouve au-dessus de la surface du bain en fusion dans la position de soutirage et dans la position de décrassage du creuset de fusion (KV).
